(19) Europäisches Patentamt / European Patent Office / Office européen des brevets

(11) **EP 4 472 031 A2**

(12) **EUROPEAN PATENT APPLICATION**

(43) Date of publication:
**04.12.2024 Bulletin 2024/49**

(21) Application number: **24178732.4**

(22) Date of filing: **29.05.2024**

(51) International Patent Classification (IPC):
**H02K 1/276** (2022.01)    **H02K 1/28** (2006.01)
**H02K 15/03** (2006.01)

(52) Cooperative Patent Classification (CPC):
**H02K 1/2766; H02K 1/28; H02K 15/03;**
H02K 2201/06; H02K 2213/03

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **31.05.2023   DE 102023114241**

(71) Applicant: **Valeo eAutomotive Germany GmbH**
**91056 Erlangen (DE)**

(72) Inventors:
• **Schlereth, Alexander**
  **97616 Bad Neustadt a.d.Saale (DE)**
• **Husnik, Stephan**
  **97616 Bad Neustadt a.d.Saale (DE)**
• **Kessler, Bernhard**
  **97616 Bad Neustadt a.d.Saale (DE)**

(74) Representative: **Valeo Powertrain Systems Service Propriété Intellectuelle Immeuble le Delta**
**14, avenue des Béguines**
**95892 Cergy Pontoise (FR)**

(54) **PERMANENT MAGNET ROTOR COMPRISING SKEWED CORE PORTIONS AND ITS MANUFACTURING METHOD**

(57)    A rotor (3a, 3b) for an electric machine (1) is specified, which comprises a rotor shaft (2, 2a..2f) and a rotor laminated core (12) which is mounted thereon with n sub-cores ($SP_1..SP_6$) which are stacked axially on one another and a plurality of rotor magnets (15) which are arranged in the sub-cores ($SP_1..SP_6$). The magnetic poles ($P_1$, $P_2$) of at least two sub-cores ($SP_1..SP_6$) are twisted in relation to one another by a gradation angle ($\alpha_{ST}$). In addition, the rotor shaft (2, 2a..2f) or a disc (14b, 21a, 21b) mounted thereon has a plurality of depressions (V, $V_1$, $V_2$) which are spaced apart from one another by an angular distance $\alpha_{i,i+1} = k \cdot \alpha_p + \alpha_{ST}$, wherein $\alpha_P$ indicates the pole angle and wherein k is an even number. The invention further relates to an electric machine (1) having a rotor (3a, 3b) of the type mentioned, to a vehicle (25) having such an electric machine (1), and to a production method for such a rotor (3a, 3b).

**Fig. 2**

EP 4 472 031 A2

**Description**

TECHNICAL FIELD

The invention relates to a rotor for an electric machine, which comprises a rotor shaft, a rotor laminated core which is mounted on the rotor shaft with n sub-cores which are stacked axially on one another and a plurality of rotor magnets which are arranged in the sub-cores. The sub-cores each have a plurality of rotor laminations stacked axially on one another, and the rotor magnets form magnetic poles of the sub-cores, wherein adjacent magnetic poles of a sub-core are each spaced apart from one another by a pole angle $\alpha_P$, and wherein the magnetic poles of at least two sub-cores are twisted in relation to one another by a gradation angle $\alpha_{ST}$. In addition, the invention relates to an electric machine having a rotor of the above-mentioned type and to a vehicle having such an electric machine. Finally, the invention also relates to a method for producing a rotor of the type mentioned.

PRIOR ART

A rotor, an electric machine, a vehicle and a production method of the type mentioned are known in principle from the prior art. In the case of such rotors, the magnetic poles are arranged in a stepped manner in the rotor laminated core in order to achieve a smoother torque profile of the electric machine concerned. Such rotor laminated cores are therefore also referred to as "stepped rotor laminated cores", or such rotors are therefore also referred to as "stepped rotors". During the production of such rotors, a plurality of sub-cores are mounted on the rotor shaft, at least some of which are twisted in relation to one another. Particular attention has to be paid to ensuring that a predetermined angular offset of the magnetic poles is observed, since otherwise undesirable vibrations and excessive generation of noise may occur. Rotor laminations are frequently made for this purpose with offset holes, through which a pin or screw is inserted to align the rotor laminations. A disadvantage is that the sub-cores differ because of the necessary offset of the holes, which makes production and storage difficult. In addition, different gradations can be realized only with great effort, since the design of the sub-cores has to be changed each time, which means that the production of stepped rotors according to the prior art is not only time-consuming, but also inflexible.

DISCLOSURE OF THE INVENTION

It is therefore an object of the invention to provide an improved rotor, an improved electric machine, an improved vehicle and an improved production method for a rotor of an electric machine. In particular, the production of stepped rotor laminated cores or rotors is intended to be made possible in a technically simple and flexible manner. In particular, the use of identical rotor laminations is intended to be made possible.

The object of the invention is achieved by a rotor of the type mentioned at the beginning, in which the rotor shaft or a disc mounted thereon has a plurality of depressions, wherein a depression having an index i+1 is spaced apart from a depression having an index i by an angular distance

$$\alpha_{i,i+1} = k \cdot \alpha_p + \alpha_{ST}$$

wherein k is an even number.

Furthermore, the object of the invention is achieved by an electric machine having a rotor of the above-mentioned type. The electric machine may in particular comprise a housing and a stator arranged in the housing, and the rotor of the type mentioned which is arranged in the stator and is mounted rotatably about a rotor axis in the housing.

In addition, the object of the invention is achieved by a vehicle which has an electric machine of the above-mentioned type, which is provided for driving the vehicle.

In addition, the object of the invention is achieved by a method for producing a rotor of an electric machine, wherein the rotor has a plurality of magnetic poles with a pole angle $\alpha_P$ lying in between and a rotor laminated core with n axially adjacent sub-cores, wherein the magnetic poles of at least two sub-cores are twisted in relation to one another by a gradation angle $\alpha_{ST}$, and wherein the method comprises the following steps:

> a) clamping a rotor shaft of the rotor in an assembly device in an angular position with an index i, which is defined by a depression with an index i in the rotor shaft or in a disc mounted on the rotor shaft,
> b) mounting a sub-core with the index i on the rotor shaft,
> c) rotating the rotor shaft into an angular position with the index i+1, which is defined by a depression with the index i+1 in the rotor shaft or in the disc mounted on the rotor shaft, using the assembly device, wherein the depression with the index i+1 is spaced apart from the depression with the index i by an angular distance

$$\alpha_{i,i+1} = k \cdot \alpha_p + \alpha_{ST}$$

> wherein k is an even number, and
> d) recursively repeating steps b) and c) with an ascending index i until all of the sub-cores are mounted, starting with the index i=1 in step a) and ending with the index i=n in step b).

It is advantageous if a locking pin of the assembly device engages in the depression with the index i before step b). As a result, the positional fixing of the rotor shaft is particularly successful. For example, the locking pin may be spring-loaded or motorized. Furthermore, the locking pin may have a cylindrical or wedge-shaped or conical shape.

The proposed measures enable an exact positioning of adjacent sub-cores and thus the production of stepped rotor laminated cores or rotors to be achieved in a technically simple and flexible manner. This allows an angular offset of the magnetic poles of adjacent sub-cores to be precisely maintained, as a result of which vibrations and excessive generation of noise during operation of the electric machine can be avoided. It is also particularly advantageous that identical rotor laminations can be used for the production of the sub-cores and the rotor laminated core. This means that changes to the gradation can be implemented without much effort, which significantly improves flexibility in the production of rotors.

Further advantageous configurations and developments of the invention are apparent from the dependent claims and from the description when considered in conjunction with the figures.

The depressions can advantageously be arranged on the circumferential side or end side in the rotor shaft or in the disc mounted thereon. If the depressions are arranged directly in the rotor shaft, the rotor shaft can be fixed in position particularly precisely, whereas a disc offers more flexibility in the design of the angle of twist of the depressions. A disc can also be used for another purpose, for example, the axial securing of the rotor laminations. Circumferential depressions generally afford the advantage that a locking pin of the assembly device only needs a small amount of space axially. Conversely, end-side depressions afford the advantage that a locking pin of the assembly device only needs a small amount of space radially.

It is advantageous if the depressions are arranged on a collar of the rotor shaft. Weakening of the rotor shaft can thereby be prevented.

It is further advantageous if the depressions are designed as cylindrical bores or have a conical or wedge-shaped profile. Wedge-shaped profiles afford the advantage that a locking pin can fix the rotor shaft in position with particularly high accuracy, whereas cylindrical bores can be easier to produce.

It is also particularly advantageous if the disc is mounted on the rotor shaft before step a) and is removed from the rotor shaft again after the assembly of the final sub-core. In this way, the disc can be used multiple times.

It is also advantageous if the disc is mounted in a form-fitting manner on the rotor shaft. An undesirable relative rotation between the disc and the rotor shaft can thereby be avoided.

It is particularly advantageous if a form fit is produced by means of a spline of the rotor shaft, via grooves of the rotor shaft for a hook spanner or via holes in the rotor shaft for a face spanner, wherein the disc interacts with the above-mentioned form-fitting elements in the mounted state. In this way, elements of the rotor shaft, which may be present in any case and are also used for another purpose, can be used for the form-fitting connection between the disc and the rotor shaft. For example, a spline can be used during subsequent operation for the form-fitting connection of a pinion on the rotor shaft. Grooves for a hook spanner or holes for a face spanner can also be used, for example, for holding purposes during the mounting of a shaft nut.

It is also advantageous if the sub-cores are all pushed onto the rotor shaft in the same angular position with respect to the assembly device. This simplifies the supply of the sub-cores, which may optionally be carried out automatically.

In general, the gradation angle can

- be the same size for all of the sub-cores or
- change its sign axially centrally if n is an odd number or
- be axially centrally zero and then change its sign if n is an even number.

The first embodiment variant enables the production of linearly stepped rotors, whereas the two other embodiment variants can be used for producing arrow-shaped or V-shaped stepped rotors.

BRIEF DESCRIPTION OF THE FIGURES

Exemplary embodiments of the invention are illustrated by way of example in the attached schematic figures. In the figures:

Fig. 1 shows an exemplary electric machine illustrated schematically in a half section;

Fig. 2 shows an oblique view of an exemplary rotor for an electric machine;

Fig. 3 shows a front view of a rotor shaft with circumferentially arranged depressions for fixing the rotor shaft in position;

Fig. 4 shows a front view of a rotor shaft with depressions arranged on the end side for fixing the rotor shaft in position;

Fig. 5 shows a front view of an arrangement with a rotor shaft and a disc which is mounted thereon and has circumferentially arranged depressions for fixing the rotor shaft in position;

Fig. 6 shows a top view of an arrangement with a rotor shaft and a disc which is mounted thereon and has depressions arranged on the end side for fixing the rotor shaft in position;

Fig. 7 shows schematically the sequence during the mounting of the rotor laminated core; and

Fig. 8 shows an exemplary vehicle with an electric machine of the proposed type.

DETAILED DESCRIPTION OF THE INVENTION

It is stated, by way of introduction, that identical parts in the different embodiments are provided with the same reference signs or the same component designations, with different indices where appropriate. The disclosure of a component contained in the description may accordingly be transferred to another component with the same reference sign or the same component designation. Also, the positional terms selected in the description, such as "top", "bottom", "rear", "front", "side" etc., relate to the figure directly described and illustrated, and, in the event of a change in position, should be transferred accordingly to the new position.

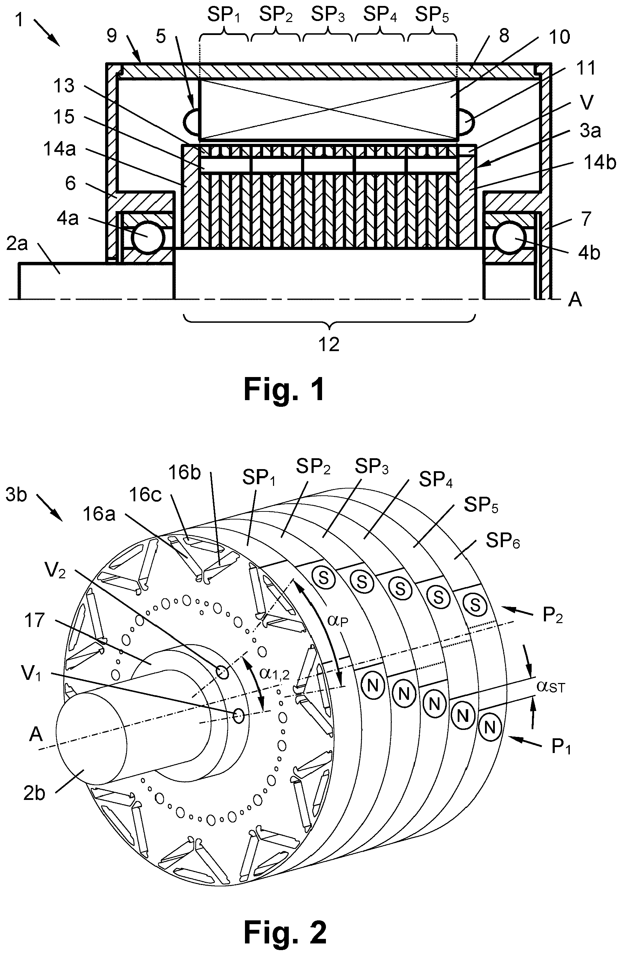

Fig. 1 shows an exemplary electric machine 1 illustrated schematically in a half section. The electric machine 1 comprises a rotor shaft 2a as part of a rotor 3a, wherein the rotor shaft 2a is rotatably mounted by means of (rolling) bearings 4a, 4b about a rotor axis or axis of rotation A in relation to a stator 5. Specifically, the first bearing 4a sits in a first front end plate 6, and the second bearing 4b sits in a second rear end plate 7. Furthermore, the electric machine 1 comprises a central housing part 8 which connects the front end plate 6 and the rear end plate 7 and accommodates the stator 5. In this example, the front end plate 6, the rear end plate 7 and the housing part 8 form the housing 9 of the electric machine 1. The stator 5 comprises a stator laminated core 10 with a plurality of stator laminations, not illustrated in detail, and stator windings 11 arranged therein.

The rotor 3a comprises a rotor laminated core 12 which comprises n sub-cores $SP_1..SP_5$ which are stacked axially on one another, wherein n is a natural number and, in the specific example, n=5. The sub-cores $SP_1..SP_5$ each comprise a plurality of rotor laminations 13 which are stacked axially on one another and, in this example, are axially secured by optional end discs 14a, 14b mounted on the rotor shaft 2a. The rotor laminated core 12 could also be axially secured with a shaft shoulder of the rotor shaft 2a and/or a shaft nut screwed onto the rotor shaft 2a. In addition, the rotor laminated core 12 has rotor magnets 15 arranged in the sub-cores $SP_1..SP_5$. Finally, in Fig. 1, a depression V is provided in the end disc 14b, the significance of which will be described in detail below.

Fig. 2 shows another exemplary rotor 3b in an oblique view. In this example, the rotor 3b has n=6 sub-cores $SP_1..SP_6$ which are stacked axially on one another and are each twisted in relation to one another by a gradation angle $\alpha_{ST}$. Therefore, the magnetic poles $P_1$, $P_2$ in the sub-cores $SP_1..SP_6$ are each at a different angular position, resulting in a stepped rotor 3b. There is in each case a pole angle $\alpha_P$ between the magnetic poles $P_1$, $P_2$

of a sub-core $SP_1..SP_6$. For example, the magnetic pole $P_1$ is a north pole N, the magnetic pole $P_2$ is by contrast a south pole S. The magnets 15 are not explicitly illustrated in Fig. 2. Instead, Fig. 2 shows recesses 16a..16c, in which the magnets 15 are arranged in the finished rotor 3b. The rotor 3b is stepped linearly, but an arrow-shaped gradation would also be conceivable, as indicated in Fig. 2 by chain-dotted lines.

On the rotor shaft 2b, specifically in a shaft shoulder or in a shaft collar 17, depressions $V_1$, $V_2$ are arranged, which are at an angular distance $\alpha_{1,2}$ to one another, which satisfies the formula.

$$\alpha_{1,2} = k \cdot \alpha_p + \alpha_{ST}$$

wherein k is an even number.

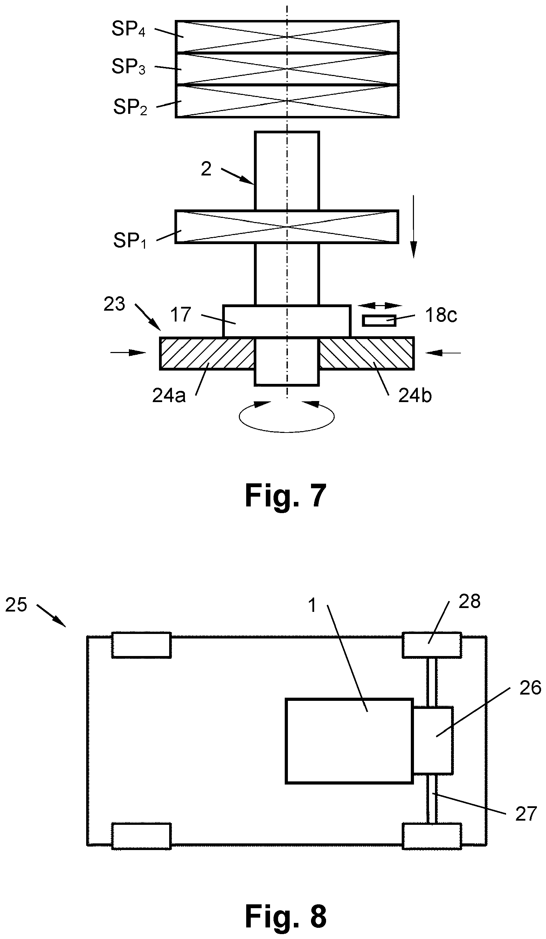

The depressions $V_1$, $V_2$ are used to fix the rotor shaft 2b in position during the mounting of the rotor laminated core 12 (see also Fig. 7 in this respect). The design of the depressions $V_1$, $V_2$ in Fig. 2 is purely by way of example, and other designs are also possible.

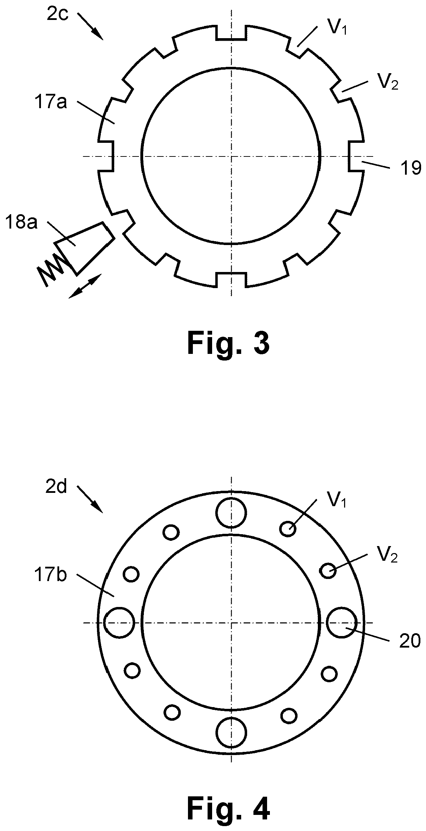

To this end, Fig. 3 shows a front view of a rotor shaft 2c with circumferentially arranged depressions $V_1$, $V_2$ which are formed in this example by axially running grooves with a wedge-shaped cross section. For fixing the rotor shaft 2c in position, for example, a spring-loaded locking pin 18a can engage or latch into the depressions $V_1$, $V_2$. In addition to the depressions $V_1$, $V_2$, the rotor shaft 2c also has an optional recess 19 for a hook spanner in order, for example, to be able to hold the rotor shaft 2c when mounting a shaft nut (not illustrated) thereon.

Fig. 4 shows another rotor shaft 2d, which is very similar to the rotor shaft 2c illustrated in Fig. 3. In contrast thereto, the depressions $V_1$, $V_2$ for fixing the rotor shaft 2d in position are not arranged circumferentially, but on the end side in a shaft collar 17b. In addition, the rotor shaft 2d has optional recesses 20 for a face spanner, the recesses also serving for easier mounting of a shaft nut.

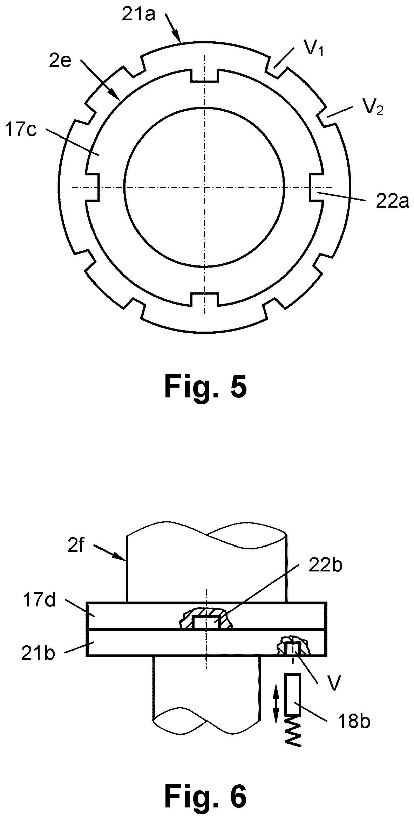

Fig. 5 shows an arrangement of a rotor shaft 2e with a disc 21a mounted thereon. In this example, the depressions $V_1$, $V_2$ for fixing the rotor shaft 2e in position are arranged on the disc 21a. It is advantageous in this case if the disc 21a has extensions 22a, which engage in the recesses 19 for the hook spanner or interact therewith and thus ensure a form-fitting fixing of the disc 21a in position relative to the rotor shaft 2e. The disc 21a may be permanently mounted on the rotor shaft 2e or may be only temporarily mounted on the rotor shaft 2e during the mounting of the rotor laminated core 12.

Fig. 6 shows a further arrangement of a rotor shaft 2f with a disc 21b mounted thereon in a top view. In this example, the depressions $V_1$, $V_2$ for fixing the rotor shaft 2f in position are also arranged in the disc 21b; however, in contrast to Fig. 5, they are arranged on the end side. In addition, the depressions $V_1$, $V_2$ are not wedge-shaped, but rather are in the form of cylindrical bores. It is advantageous in turn if the disc 21b has extensions 22b which engage in the recesses 20 for the face spanner or interact therewith and thus ensure a form-fitting fixing of the disc 21b in position relative to the rotor shaft 2f. The disc 21b may in turn be permanently mounted on the rotor shaft 2f or may be only temporarily mounted on the rotor shaft 2f during the mounting of the rotor laminated core 12.

In the examples shown in Figs 5 and 6, a form fit is produced via the recesses 19 and 20. Alternatively, it would also be conceivable, for example, for a form fit to be produced via a spline of the rotor shaft 2a..2f.

Fig. 7 shows schematically the sequence during the mounting of the rotor laminated core 12. Specifically, Fig. 7 shows an assembly device 23 with two clamping jaws 24a, 24b, by means of which a rotor shaft 2 is clamped. In addition, four sub-cores $SP_1..SP_4$ are illustrated in Fig. 7.

A method for producing a rotor 3a, 3b may comprise the following steps:

> a) clamping a rotor shaft 2, 2a..2f of the rotor 3a, 3b in the assembly device 23 in an angular position with an index i, which is defined by a depression V, $V_1$, $V_2$ with an index i in the rotor shaft 2, 2a..2f or in a disc 14b, 21a, 21b mounted on the rotor shaft 2, 2a..2f,
> b) mounting a sub-core $SP_1..SP_6$ with the index i on the rotor shaft 2, 2a..2f,
> c) rotating the rotor shaft 2, 2a..2f into an angular position with the index i+1, which is defined by a depression V, $V_1$, $V_2$ with the index i+1 in the rotor shaft 2, 2a..2f or in the disc 14b, 21a, 21b mounted on the rotor shaft 2, 2a..2f, using the assembly device 23, wherein the depression V, $V_1$, $V_2$ with the index i+1 is spaced apart from the depression V, $V_1$, $V_2$ with the index i by an angular distance,

$$\propto_{i,i+1} = k \cdot \propto_p + \propto_{ST}$$

> wherein k is an even number, and
> d) recursively repeating steps b) and c) with an ascending index i until all of the sub-cores $SP_1..SP_6$ are mounted, starting with the index i=1 in step a) and ending with the index i=n in step b).

In order to ensure a reliable fixing of the rotor shaft 2, 2a..2f in position, it can be provided that a locking pin 18a..18c of the assembly device 23 engages in the depression $V_1$, $V_2$ with the index i before step b), as illustrated in Fig. 7 for the locking pin 18c. For example, the locking pin 18c may be spring-loaded or motorized. Furthermore, the locking pin 18c may have a cylindrical or wedge-shaped or conical shape.

The proposed measures allow an offset of the magnetic poles $P_1$, $P_2$ of adjacent sub-cores $SP_1..SP_6$ by the gradation angle $\alpha_{ST}$ to be precisely maintained, as a result of which vibrations and excessive generation of noise during the operation of the electric machine 1 can be avoided. It is also particularly advantageous that identical rotor laminations 13 can be used for the production of the sub-cores $SP_1..SP_6$ and the rotor laminated core 12.

Advantageously, the sub-cores $SP_1..SP_4$ are all pushed onto the rotor shaft 2 in the same angular position with respect to the assembly device 23. This simplifies the supply of the sub-cores $SP_1..SP_4$, which may optionally be carried out automatically.

In one embodiment variant, it may be provided that a disc 14b, 21a, 21b remains on the rotor shaft 2, 2a..2f after the mounting of the rotor laminated core. This is true, for example, of the disc 14b, which is intended to axially secure the rotor laminated core 12 even when the electric machine is in operation. However, it is also conceivable for the disc 21a, 21b to be mounted on the rotor shaft 2, 2a..2f (only) before step a) and to be removed again from the rotor shaft 2, 2a..2f after the mounting of the final sub-core $SP_1..SP_6$. In this way, the disc 21a, 21b may be used multiple times.

In general, the gradation angle $\alpha_{ST}$ can be the same size for all of the sub-cores $SP_1..SP_6$, as is the case, for example, in Fig. 2. This embodiment variant permits the production of linearly stepped rotors 3b. It is also conceivable for the gradation angle $\alpha_{ST}$ to be axially centrally zero and for it to then change its sign when n is an even number, as a result of which arrow-shaped stepped rotors 3b can be produced. In Fig. 2, such an embodiment is indicated by chain-dotted lines. Finally, it is also conceivable for the gradation angle $\alpha_{ST}$ to change its sign axially centrally if n is an odd number. This likewise produces an arrow-shaped stepped rotor 3b; however, there are no sub-cores SPs, $SP_4$ centrally which have the same angular position, since n in this case is an odd number.

Fig. 8 finally shows the electric machine 1 installed in a vehicle 25. The vehicle 25 has two axles, one of which is driven. Specifically, the electric machine 1 is connected to the half-axles 27 of the rear axle or front axle via an optional gearbox 26. Finally, the driven wheels 28 are mounted on the half-axles 27. The electric machine 1, the gearbox 26 and the half-axles 28 are part of the drive train of the vehicle 25. The drive of the vehicle 25 is at least partially or temporarily carried out by the electric machine 1. This means that the electric machine 1 may serve as the sole drive of the vehicle 25 or may be provided, for example, in conjunction with an internal combustion engine (hybrid drive).

In conclusion, it is emphasized that the scope of protection is determined by the patent claims. The description and the drawings should, however, be used to interpret the claims. The features contained in the figures can be interchanged and combined with one another as desired. In particular, it is also emphasized that the devices illustrated may in reality comprise even more or even fewer component parts than illustrated. In some cases, the illustrated devices or their component parts may also be illustrated not to scale and/or on an enlarged scale and/or on a reduced scale.

List of reference signs

| 1 | Electric machine |
| 2, 2a..2f | Rotor shaft |
| 3a, 3b | Rotor |
| 4a, 4b | Bearing |
| 5 | Stator |

| 6 | First end plate |
| 7 | Second end plate |
| 8 | Stator housing |
| 9 | Machine housing |
| 10 | Stator laminated core |

| 11 | Stator winding |
| 12 | Rotor laminated core |
| 13 | Rotor lamination |
| 14a, 14b | End disc |
| 15 | Rotor magnet |

| 16a..16c | Recess for rotor magnet |
| 17, 17a,17d | Shaft shoulder / shaft collar |
| 18a..18c | Locking pin |
| 19 | Recess for hook spanner |
| 20 | Recess for face spanner |

| 21a, 21b | (Latching) disc |
| 22a, 22b | Extension |
| 23 | Assembly device |
| 24a, 24b | Clamping jaw |
| 25 | Vehicle |

| 26 | Gearbox |
| 27 | Half-axle |
| 28 | Wheel |

| A | Rotor axis |
| N | North pole |
| $P_1$, $P_2$ | Magnetic pole |
| S | South pole |
| $SP_1..SP_6$ | Sub-core |
| V, $V_1$, $V_2$ | Depression |

| $\alpha_{ST}$ | Gradation angle |
| $\alpha_P$ | Pole angle |
| $\alpha_{1,2}$ | Angular distance between depressions |

## Claims

1. Rotor (3a, 3b) for an electric machine (1), comprising

- a rotor shaft (2, 2a..2f),
- a rotor laminated core (12) which is mounted on the rotor shaft (2, 2a..2f) with n sub-cores ($SP_1..SP_6$) which are stacked axially on one another and each of which has a plurality of rotor laminations (13) stacked axially on one another,
- a plurality of rotor magnets (15) which are arranged in the sub-cores ($SP_1..SP_6$) and form magnetic poles ($P_1$, $P_2$) of the sub-cores ($SP_1..SP_6$), wherein adjacent magnetic poles ($P_1$, $P_2$) of a sub-core ($SP_1..SP_6$) are each spaced apart from one another by a pole angle ($\alpha_P$), and wherein the magnetic poles ($P_1$, $P_2$) of at least two sub-cores ($SP_1..SP_6$) are twisted in relation to one another by a gradation angle ($\alpha_{ST}$),
**characterized in that**
- the rotor shaft (2, 2a..2f) or a disc (14b, 21a, 21b) mounted thereon has a plurality of depressions (V, $V_1$, $V_2$), wherein a depression (V, $V_1$, $V_2$) having an index i+1 is spaced apart from a depression (V, $V_1$, $V_2$) having an index i by an angular distance.

$$\alpha_{i,i+1}= k \cdot \alpha_p + \alpha_{ST}$$

wherein k is an even number.

2. Rotor (3a, 3b) according to Claim 1, **characterized in that** the depressions (V, $V_1$, $V_2$) are arranged on the circumferential side or end side in the rotor shaft (2, 2a..2f) or in the disc (14b, 21a, 21b) mounted thereon.

3. Rotor (3a, 3b) according to Claim 1 or 2, **characterized in that** the depressions (V, $V_1$, $V_2$) are arranged on a collar (17, 17a..17d) of the rotor shaft (2, 2a..2f).

4. Rotor (3a, 3b) according to any one of the preceding claims, **characterized in that** the depressions (V, $V_1$, $V_2$) are designed as cylindrical bores or have a conical or wedge-shaped profile.

5. Electric machine (1) having a rotor (3a, 3b) according to any one of the preceding claims.

6. Vehicle (25) having an electric machine (1) according to Claim 5, which is provided for driving the vehicle (25).

7. Method for producing a rotor (3a, 3b) for an electric machine (1), wherein the rotor (3a, 3b) has a plurality of magnetic poles ($P_1$, $P_2$) with a pole angle ($\alpha_P$) lying in between and a rotor laminated core (12) with n axially adjacent sub-cores ($SP_1..SP_6$), wherein the magnetic poles ($P_1$, $P_2$) of at least two sub-cores ($SP_1..SP_6$) are twisted in relation to one another by

a gradation angle ($\alpha_{ST}$), comprising the steps of

a) clamping a rotor shaft (2, 2a..2f) of the rotor (3a, 3b) in an assembly device (23) in an angular position with an index i, which is defined by a depression (V, $V_1$, $V_2$) with an index i in the rotor shaft (2, 2a..2f) or in a disc (14b, 21a, 21b) mounted on the rotor shaft (2, 2a..2f),
b) mounting a sub-core ($SP_1$..$SP_6$) with the index i on the rotor shaft (2, 2a..2f),
c) rotating the rotor shaft (2, 2a..2f) into an angular position with the index i+1, which is defined by a depression (V, $V_1$, $V_2$) with the index i+1 in the rotor shaft (2, 2a..2f) or in the disc (14b, 21a, 21b) mounted on the rotor shaft (2, 2a..2f), using the assembly device (23), wherein the depression (V, $V_1$, $V_2$) with the index i+1 is spaced apart from the depression (V, $V_1$, $V_2$) with the index i by an angular distance

$$\alpha_{i,i+1} = k \cdot \alpha_p + \alpha_{ST}$$

wherein k is an even number, and
d) recursively repeating steps b) and c) with an ascending index i until all of the sub-cores ($SP_1$..$SP_6$) are mounted, starting with the index i=1 in step a) and ending with the index i=n in step b).

8. Method according to Claim 7, **characterized in that** the disc (21a, 21b) is mounted on the rotor shaft (2, 2a..2f) before step a) and is removed from the rotor shaft (2, 2a..2f) again after the assembly of the final sub-core ($SP_1$..$SP_6$).

9. Method according to Claim 7 or 8, **characterized in that** the disc (14b, 21a, 21b) is mounted in a form-fitting manner on the rotor shaft (2, 2a..2f).

10. Method according to Claim 9, **characterized in that** a form fit is produced by means of a spline of the rotor shaft (2, 2a..2f), via grooves of the rotor shaft (2, 2a..2f) for a hook spanner or via holes in the rotor shaft (2, 2a..2f) for a face spanner, wherein the disc (14b, 21a, 21b) interacts with the above-mentioned form-fitting elements in the mounted state.

11. Method according to any one of the preceding claims, **characterized in that** a locking pin (18a..18c) of the assembly device (23) engages in the depression (V, $V_1$, $V_2$) with the index i before step b).

12. Method according to any one of the preceding claims, **characterized in that** the sub-cores ($SP_1$..$SP_6$) are all pushed onto the rotor shaft (2, 2a..2f) in the same angular position with respect to the assembly device (23).

13. Method according to any one of the preceding claims, **characterized in that** the gradation angle ($\alpha_{ST}$)

- is the same size for all of the sub-cores ($SP_1$..$SP_6$) or
- changes its sign axially centrally if n is an odd number or
- is axially centrally zero and then changes its sign if n is an even number.

$SP_1$  $SP_2$  $SP_3$  $SP_4$  $SP_5$

1

9  5

13

15

14a

6

4a

2a

8  10

11

V

3a

14b

7

4b

A

12

# Fig. 1

3b

16c

16b

16a

$SP_1$  $SP_2$  $SP_3$  $SP_4$

$SP_5$

$SP_6$

$V_2$

17

$V_1$

A

2b

$\alpha_P$

$\alpha_{1,2}$

S  S  S  S  S

N  N  N  N  N

$P_2$

$\alpha_{ST}$

$P_1$

# Fig. 2

2c

V₁

V₂

17a

19

18a

## Fig. 3

2d

V₁

V₂

17b

20

## Fig. 4

21a

2e

V₁

V₂

17c

22a

## Fig. 5

2f

22b

17d

21b

V

18b

## Fig. 6

**Fig. 7**

**Fig. 8**